# EUROPEAN PATENT SPECIFICATION

(11) **EP 1 883 190 B1**
(45) Date of publication and mention of the grant of the patent: **15.12.2010**
(21) Application number: 07014824.2
(22) Date of filing: 27.07.2007
(51) Int. Cl.: H04L 12/56, H04W 36/06

(54) **Method and apparatus for setting field data of scheduling information in a wireless communications system**
Verfahren und Vorrichtung zur Einstellung von Felddaten über Terminplaninformation in einem drahtlosen Kommunikationssystem
Procédé et appareil pour configurer des données de terrain pour la programmation d'informations dans un système de communications sans fil

(30) Priority: 28.07.2006 US 833822 P
(43) Date of publication of application: 30.01.2008
(73) Proprietor: Innovative Sonic Limited, Road Town Tortola (VG)
(72) Inventor: Jiang, Sam Shiaw-Shiang, Peitou Taipei City (TW)
(74) Representative: Hager, Thomas Johannes

(56) References cited:
- EP-A- 1 509 012
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-R2, no. V710, June 2006 (2006-06), XP014035575 ISSN: 0000-0001
- ASUSTEK: "CHANGE REQUEST 25.321 CR 0289 - HLBS values in Scheduling Information message" 3GPP, 28 August 2006 (2006-08-28), - 1 September 2006 (2006-09-01) XP002449919 Tallinn, Estonia

## Description

This application claims the benefit of U.S. Provisional Application No. 60/833,822, filed on July 28, 2006 and entitled "Method and Apparatus for Scheduling Information in HSUPA".

The present invention relates to a method and apparatus for setting field data of a scheduling information in a wireless communications system according to the pre-characterizing clauses of claims 1 and 2. Such a method and apparatus are known from "Universal Mobile Telecommunications-System (UMTS)" ETSI STANDARDS, SOPHA_ANTIPO, FR, vol. 3-R2, no. V710, June 2006 (2006-06).

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting third generation mobile telecommunication technology, the prior art provides High Speed Downlink Package Access (HSDPA) and High Speed Uplink Package Access (HSUPA), which are used to increase bandwidth utility rate and package data processing efficiency to improve uplink/downlink transmission rate.

HSUPA increases upstream network performance, reduces transmission delay by rapid retransmission of erroneous data transmissions, and can adjust transmission rate based on channel quality. To realize this type of "power control," HSUPA adopts technologies such as NodeB Scheduling, Hybrid Automatic Repeat Request (HARQ), Soft Handover, and Short Frame Transmission. Correspondingly, the 3rd Generation Partnership Project (3GPP) defines an Enhanced Dedicated Transport Channel (E-DCH) for controlling operations of HSUPA. E-DCH introduces new physical layer channels, such as E-HICH, E-RGCH, E-AGCH, E-DPCCH, and E-DPDCH, which are used for transmitting HARQ ACK/NACK, Uplink Scheduling Information (SI), Control Plane information, and User Plane information. Detailed definitions of the above can be found in the Medium Access Control (MAC) protocol specification, "3GPP TS 25.321 V7.1.0," and are not given here.

The uplink SI is used to provide the serving E-DCH Node-B with a better view of the amount of system resources needed by the UE and the amount of resources it can actually make use of. According to Section 9.2.5.3.2 of the aforementioned MAC protocol specification, the uplink SI includes the following fields:
1. Highest priority Logical channel ID (HLID) field: The HLID field identifies unambiguously the highest priority logical channel with available data. If multiple logical channels exist with the highest priority, the one corresponding to the highest buffer occupancy will be reported. The length of the HLID is 4 bits. In case the TEBS (mentioned in the following) is indicating index 0 (0 byte), the HLID shall indicate the value "0000."
2. Total E-DCH Buffer Status (TEBS) field: The length of this field is 5 bits. The TEBS field identifies the total amount of data available across all logical channels for which reporting has been requested by the RRC (Radio Resource Control) entity and indicates the amount of data in number of bytes that is available for transmission and retransmission in the RLC (Radio Link Control) layer. When MAC is connected to an AM (Acknowledgement Mode) RLC entity, control PDUs (Protocol Data Units) to be transmitted and RLC PDUs outside the RLC Tx (Transmission) window shall also be included in the TEBS. RLC PDUs that have been transmitted but not negatively acknowledged by the peer entity shall not be included in the TEBS. Besides, according to Table 9.2.5.3.2-1 of the aforementioned MAC protocol specification, the TEBS field can store 32 TEBS indexes, each corresponding to a range of TEBS values.
3. Highest priority Logical channel Buffer Status (HLBS) field: The length of this field is 4 bits. The HLBS field indicates the amount of data available from the logical channel identified by HLID, relative to the highest value of the buffer size range reported by TEBS when the reported TEBS index is not 31, and relative to 50000 bytes when the reported TEBS index is 31. According to Table 9.2.5.3.2-2 of the aforementioned MAC protocol specification, the HLBS field can store 16 HLBS indexes, each corresponding to a range of HLBS values (represented in percentage and between 0 and 100). In case the TEBS field is indicating index 0 (0 byte), the HLBS field shall indicate index 0.
4. UE Power Headroom (UPH) field: The length of UPH is 5 bits. The UPH field indicates the ratio of the maximum UE transmission power and the corresponding DPCCH (Dedicated Physical Control Channel) code power.

In short, the HLID field indicates the highest priority logical channel, the TEBS field indicates the amount of data available across all logical channels for transmission and retransmission, and the HLBS field indicates the amount of data available from the highest priority logical channel, relative to the highest value of the buffer size range reported by TEBS or relative to 50000 bytes. For example, if TEBS index = 18, i.e. 940 < TEBS ≤ 1248 as illustrated in Table 9.2.5.3.2-1 of the aforementioned MAC protocol specification, and if the amount of data available for transmission from the logical channel identified by HLID is 1000 bytes, which is 1000/1248 = 80.1% relative to the highest value (i.e. 1248) of the buffer range, the HLBS index would be 14 according to Table 9.2.5.3.2-2 of the aforementioned MAC protocol specification. By the same token, if TEBS index = 31, and if the amount of data available for transmission from the logical channel identified by HLID is 30000 bytes, which is 30000/50000 = 60% relative to 50000 bytes, HLBS index would be 13.

Therefore, using the method specified in Section 9.2.5.3.2 of the MAC protocol specification, "3GPP TS 25.321 V7.1.0", the MAC entity can obtain each field of the uplink SI. However, the prior art can work fine only when the TEBS index is smaller than or equal to 30, because the HLBS value must be in the range of 0 to 100. According to the definition of the HLBS field, if TEBS index < 31, the HLBS value is the ratio of the amount of data available from the highest priority logical channel to the amount of data available across all logical channels ( = TEBS value), meaning that the HLBS value must be in the range of 0 to 100%. Oppositely, if TEBS index = 31, the HLBS value is the ratio of the amount of data available from the highest priority logical channel to 50000 bytes. That is, when the TEBS index equals 31, the HLBS value is the ratio of the amount of data available from the highest priority logical channel to a fixed value (50000). In such case, if the amount of data available from the highest priority logical channel is greater than 50000 bytes, the HLBS value will be greater than 100. For example, if the amount of data available from the logical channel identified by HLID is 60000 bytes, HLBS value = 60000/50000 = 120%.

However, the maximum number of HLBS value is 100 as illustrated in Table 9.2.5.3.2-2 of the aforementioned MAC protocol specification, meaning that there is no appropriate index for HLBS value greater than 100. As a result, the SI cannot be properly represented, and the network cannot accurately allocate radio resources for UEs, which may affect transmission efficiency.

This in mind, the present invention aims at providing a method and apparatus for setting field data of scheduling information in a wireless communications system, so as to maintain transmission efficiency.

This is achieved by a method and apparatus for setting field data of scheduling information in a wireless communications system according to claims 1 and 2.

As will be seen more clearly from the detailed description following below, the claimed method for setting field data of a scheduling information in a wireless communications system according to the Medium Access Control protocol specification of the 3^{rd} Generation Partnership Project is disclosed. The scheduling information comprises at least a Highest priority Logical channel Buffer Status field, called HLBS field hereinafter, for storing an HLBS index. The method comprises setting a value of the HLBS index to be a second value when an HLBS value is greater than a first value, and storing the value of the HLBS index into the HLBS field.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 is a flowchart of a process according to the present invention.

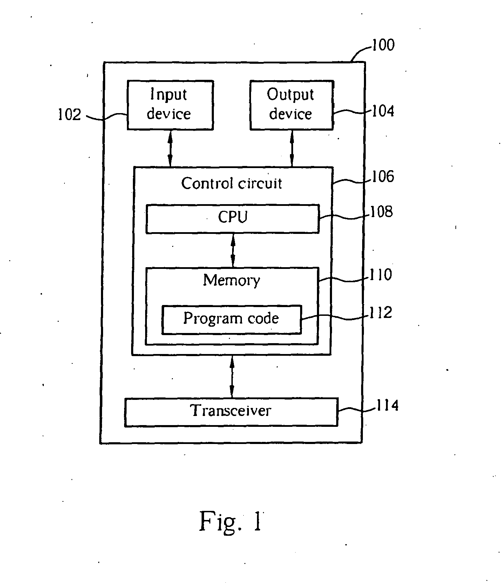

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

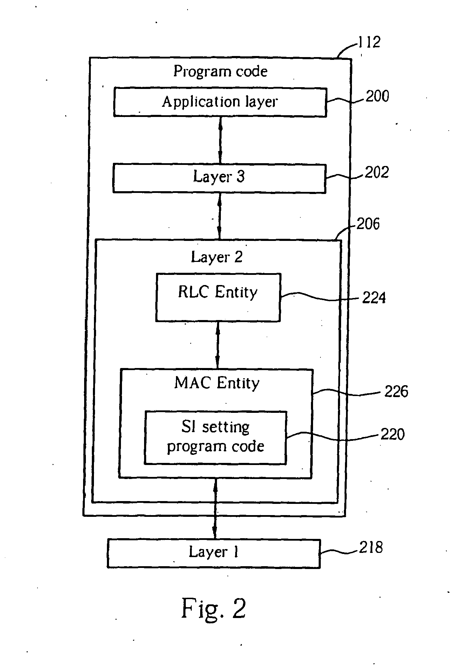

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. A primary function of the RLC entity 224 is providing different transmission quality processing, performing segmentation, reassembly, concatenation, padding, retransmission, sequence check, and duplication detection on transmitted data or control instructions based on different transmission quality requirements. The MAC entity 226 can match packets received from different logic channels of the RLC entity 224 to common, shared, or dedicated transport channels according to radio resource allocation commands of the Layer 3 (RRC layer) 202, for performing channel mapping, multiplexing, transport format selection, or random access control.

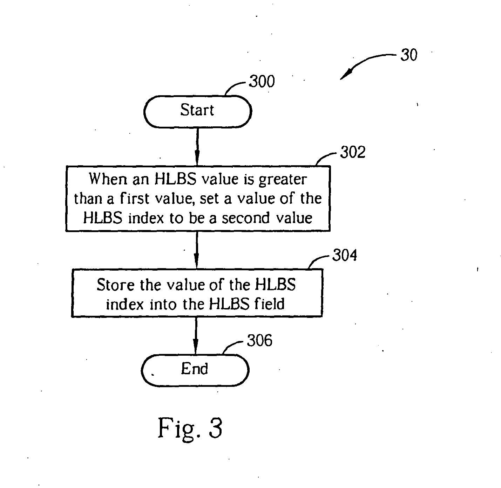

In some applications, such as when realizing high-speed uplink packet access (HSUPA) functions, the MAC entity 226 can execute an HARQ process, and retransmit packets based on transmission circumstances and trigger transmission of SI. In this situation, the present invention provides an SI setting program code 220 utilized for accurately setting field data of an SI, in order to accurately allocate radio resources. Please refer to Fig. 3, which is a flowchart diagram of a process 30 according to an embodiment of the present invention. The process 30 is utilized for setting an HLBS field of an SI in a wireless communications system, which can be compiled into the SI setting program code 220, and comprises the following steps:
Step 300: Start.
Step 302: When an HLBS value is greater than a first value, set a value of the HLBS index to be a second value.
Step 304: Store the value of the HLBS index into the HLBS field.
Step 306: End.

In the process 30, when the HLBS value is greater than the first value, the embodiment of the present invention sets the HLBS index to be the second value, and stores the HLBS index into the HLBS field. In other words, the embodiment of the present invention does not set the maximum number of the HLBS value. Preferably, the first value equals 82, while the second value is corresponding to the maximum number represented by the HLBS field, or 15. That is, when HLBS > 82, the embodiment of the present invention sets the HLBS index to be 15, so as to prevent the prior art problems.

As mentioned above, when the TEBS index equals 31, the HLBS value is the ratio of the amount of data available from the highest priority logical channel to 50000 bytes. If the amount of data available from the highest priority logical channel is greater than 50000 bytes, the HLBS value will be greater than 100. In the prior art, there is no appropriate index for HLBS value greater than 100, causing that the network cannot accurately allocate radio resources. In comparison, the embodiment of the present invention does not set the maximum number of HLBS. Instead, the embodiment of the present invention sets the HLBS index to be 15 when the HLBS value is greater than 82. As a result, in case the TEBS index equals 31, the embodiment of the present invention can accurately set the HLBS index, to obtain valid uplink SIs, so that the network can allocate radio resources for UEs, and maintain transmission efficiency.

For example, if TEBS index = 31 and the amount of data available from the highest priority logical channel is 60000 bytes, the HLBS value equals 120%. Therefore, the embodiment of the present invention sets the HLBS index to be 15 and stores into the HLBS field. As a result, the network knows that HLBS > 82, meaning that the amount of data available from the highest priority logical channel is greater than 50000*82% = 41000 bytes, and the scheduler of the network can allocate radio resources for UEs accordingly.

In summary, the present invention does not set the maximum number of HLBS. Instead, the present invention sets the HLBS index to be the second value when the HLBS value is greater than a first value. Therefore, the network can accurately allocate radio resources for UEs, and maintain transmission efficiency.

## Claims

1. A method for setting field data of a scheduling information in a wireless communications system according to the Medium Access Control protocol specification of the 3^{rd} Generation Partnership Project, the scheduling information comprising at least a Highest priority Logical channel Buffer Status field, called HLBS field hereinafter, for storing a Higher priority Logical channel Buffer Status index, called HLBS index hereinafter, the method comprising:
setting a value of the HLBS index to 15 when a Higher priority Logical channel Buffer Status value, called HLBS value hereinafter, is greater than 82 (302) and smaller or equal 100; and
storing the value of the HLBS index into the HLBS field (304),
**characterized in that**
the value of the HLBS index is set to 15 when the HLBS value is greater than 100.

2. A communications device (100) of a wireless communications system according to the Medium Access Control protocol specification of the 3^{rd} Generation Partnership Project utilized for accurately setting field data of a scheduling information, the scheduling information comprising at least a Highest priority Logical channel Buffer Status field, called HLBS field hereinafter, for storing a Higher priority Logical channel Buffer Status index, called HLBS index hereinafter, the communications device comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
wherein the program code (112) comprises:
setting a value of the HLBS index to be 15 when a Higher priority Logical channel Buffer Status value, called HLBS value hereinafter, is greater than 82 (302) and smaller or equal 100; and
storing the value of the HLBS index into the HLBS field (304),
**characterized in that** the program code (112) further comprises setting the value of the HLSB index to 15 when the HLBS value is greater than 100.

## Patentansprüche

1. Verfahren zum Festlegen von Felddaten einer Zeitplaninformation in einem drahtlosen Kommunikationssystem gemäß der Medium Access Control-Protokollspezifikation des 3. Generation Partnership Projekts, wobei die Zeitplaninformation zumindest ein Logikkanal-Pufferstatus-Feld höchster Priorität, nachfolgend als HLBS-Feld bezeichnet, zum Speichern eines Logikkanal-Pufferstatus-Index höherer Priorität, nachfolgend als HLBS-Index bezeichnet, umfasst, wobei das Verfahren umfasst:
Festlegen eines Werts des HLBS-Index auf 15, wenn ein Logikkanal-Pufferstatus-Wert höherer Priorität, nachfolgend als HLBS-Wert bezeichnet,
größer als 82 ist (302) oder kleiner oder gleich 100 ist; und
Speichern des Werts des HLBS-Index in dem HLBS-Feld (304),
**dadurch gekennzeichnet, dass**
der Wert des HLBS-Index auf 15 gesetzt wird, wenn der HLBS-Wert größer als 100 ist.

2. Kommunikationsvorrichtung (100) eines drahtlosen Kommunikationssystems gemäß der Medium Access Control-Protokollspezifikation des 3. Generation Partnership Projekts, die zur genauen Festlegung von Felddaten einer Zeitplaninformation genutzt wird, wobei die Zeitplaninformation zumindest ein Logikkanal-Pufferstatus-Feld höchster Priorität, nachfolgend als HLBS-Feld bezeichnet, zum Speichern eines Logikkanal-Pufferstatus-Index höherer Priorität, nachfolgend als HLBS-Index bezeichnet, umfasst, wobei die Kommunikationsvorrichtung umfasst:
eine Steuerschaltung (106) zum Realisieren von Funktionen der Kommunikationsvorrichtung (100);
eine zentrale Recheneinheit (108), die in der Steuerschaltung (106) installiert ist, um einen Programmcode (112) auszuführen, um die Steuerschaltung (106) zu betätigen; und
einen Speicher (110), der mit der zentralen Recheneinheit (108) verbunden ist,
um den Programmcode (112) zu speichern;
wobei der Programmcode (112) umfasst:
Festlegen eines Werts des HLBS-Index auf 15, wenn ein Logikkanal-Pufferstatus-Wert höherer Priorität, nachfolgend als HLBS-Wert bezeichnet,
größer als 82 ist (302) oder kleiner oder gleich 100 ist; und
Speichern des Werts des HLBS-Index in dem HLBS-Feld (304),
**dadurch gekennzeichnet, dass** der Programmcode (112) ferner ein Festlegen des Werts des HLBS-Index auf 15 umfasst, wenn der HLBS-Wert größer als 100 ist.

## Revendications

1. Procédé pour établir des données de terrain d'une information de planification dans un système de communications sans fil selon la description du Protocole de Contrôle d'Accès au Support du projet de Partenariat de 3^{ème} Génération, l'information de planification comprenant au moins un champ d'État de Mémoire Tampon de Canal Logique de Plus Haute Priorité, nommé champ HLBS dans ce qui suit, pour stocker un index d'État de Mémoire Tampon de Canal Logique de Plus Haute Priorité, nommé index HLBS dans ce qui suit, procédé comprenant :
- l'établissement d'une valeur de l'index HLBS à 15 lorsqu'une valeur d'État de Mémoire Tampon de Canal Logique de Plus Haute Priorité, nommée valeur HLBS dans ce qui suit, est supérieure à 82 (302) et inférieure ou égale à 100 ; et
- le stockage de la valeur de l'index HLBS dans le champ HLBS (304) ;
**caractérisé en ce que :**
- la valeur de l'index HLBS est établie à 15 lorsque la valeur HLBS est supérieure à 100.

2. Dispositif de communications (100) d'un système de communications sans fil selon la description du Protocole de Contrôle d'Accès au Support du projet de Partenariat de 3^{ème} Génération utilisé pour établir, de façon précise, des données de terrain d'une information de planification, l'information de planification comprenant au moins un champ d'État de Mémoire Tampon de Canal Logique de Plus Haute Priorité, nommé champ HLBS dans ce qui suit, pour stocker un index d'État de Mémoire Tampon de Canal Logique de Plus Haute Priorité, nommé index HLBS dans ce qui suit, dispositif de communications comprenant :
- un circuit de contrôle (106) pour appliquer des fonctions du dispositif de communications (100) ;
- une unité centrale de traitement (108) installée dans le circuit de contrôle (106) pour exécuter un code de programme (112) pour actionner le circuit de contrôle (106) ; et
- une mémoire (110) couplée à l'unité centrale de traitement (108) pour stocker le code de programme (112) ;
dans lequel le code de programme (112) comprend :
- l'établissement d'une valeur de l'index HLBS à 15 lorsqu'une valeur d'État de Mémoire Tampon de Canal Logique de Plus Haute Priorité, nommée valeur HLBS dans ce qui suit, est supérieure à 82 (302) et inférieure ou égale à 100 ; et
- le stockage de la valeur de l'index HLBS dans le champ HLBS (304) ;
**caractérisé en ce que** le code de programme (112) comprend, de plus, l'établissement de la valeur de l'index HLBS à 15 lorsque la valeur HLBS est supérieure à 100.
